# EUROPÄISCHE PATENTSCHRIFT

(11) **EP 3 942 204 B1**
(45) Veröffentlichungstag und Bekanntmachung des Hinweises auf die Patenterteilung: **09.08.2023**
(21) Anmeldenummer: 20715297.6
(22) Anmeldetag: 24.03.2020
(51) Int. Cl.: F16J 15/46

(54) **TRENNVORRICHTUNG**
SEPARATING DEVICE
DISPOSITIF DE SÉPARATION

(30) Priorität: 16.05.2019 DE 102019207167
(43) Veröffentlichungstag der Anmeldung: 26.01.2022
(73) Patentinhaber: GLATT GMBH, 79589 Binzen (DE)
(72) Erfinder: THIES, Jochen, 79540 Lörrach (DE); ZIMMERMANN, Dirk, 79664 Wehr (DE)
(74) Vertreter: Patentanwälte Magenbauer & Kollegen Partnerschaft mbB
(86) Internationale Anmeldenummer: PCT/EP2020/058113
(87) Internationale Veröffentlichungsnummer: WO 2020/229029

(56) Entgegenhaltungen:
- EP-A1- 1 559 466
- CH-A- 446 211
- DE-C- 876 342
- FR-A5- 2 171 688

## Beschreibung

Die Erfindung betrifft eine Trennvorrichtung mit einer Trenneinheit zur Abtrennung und Abdichtung zweier Räume eines Behälters, wobei die Trenneinheit einen eine als Dichtfläche ausgebildete radiale Außenumfangsfläche aufweisenden Grundkörper umfasst, wobei die Trenneinheit eine im Bereich des Außenumfangs angeordnete, jeweils über eine oberhalb und unterhalb des Grundkörpers angeordnete Stützstruktureinheit verfügende Stützstruktur aufweist, und der Grundkörper mit der Stützstruktur einen die aufblasbare Dichtung zumindest teilweise aufnehmenden Aufnahmeraum aufspannt, die Trenneinheit im eingebauten Zustand derart in dem eine eine Gegendichtfläche ausbildenden Behälterwand aufweisenden Behälter angeordnet ist, dass die Dichtfläche von der Gegendichtfläche ringförmig umschlossen ist, sodass die aufblasbare Dichtung im drucklosen, entspannten Zustand lose in dem Aufnahmeraum angeordnet ist und im druckbeaufschlagten Zustand expandiert ist und sowohl an der Dichtfläche als auch der Gegendichtfläche anliegt, sodass die aufblasbare Dichtung den Behälter in zwei Räume abtrennt und diese gegeneinander abdichtet.

Aufblasbare Dichtungen werden im Stand der Technik für die Abtrennung und Abdichtung von beweglichen Bauteilen wie Filterplatten oder klappbaren Anströmböden eingesetzt, um zu vermeiden, dass das Prozessgas seitlich durch einen zwischen den beweglichen und zu durchströmenden Bauteilen und einer Behälterwand ausgebildeten Spalt, insbesondere einen Ringspalt, strömt. Hierzu werden die aufblasbaren Dichtungen in einer in dem beweglichen Bauteil ausgebildeten Nut montiert. Die aufblasbare Dichtung ist im druckbeaufschlagten Zustand aufgrund der der Nut innewohnenden Form gezwungen in Richtung der als Dichtfläche ausgebildeten Behälterwand zu expandieren, wodurch eine sehr robuste Abdichtung zwischen den abzudichtenden Bauteilen erzeugt wird.

An dieser aus dem Stand der Technik bekannten Einbauweise ist nachteilig, dass bspw. eine Clean-in-Place (CIP) Reinigung der Nut und der in die Nut einbrachten, aufblasbaren Dichtung nicht möglich ist. Für ein validierbares Reinigungsergebnis ist es deshalb notwendig die aufblasbare Dichtung auszubauen und die Nut sowie die aufblasbare Dichtung manuell zu reinigen. Aus diesem Grund wird bei für eine automatische, rückstandsfreie Reinigung ausgelegten Super Clean (SC) Anlagen, wenn möglich, auf die Verwendung von aufblasbaren Dichtungen verzichtet. Dieser Verzicht auf aufblasbare Dichtungen zieht zur Erlangung der vollen Funktionalität der Anlage aufwendige konstruktive technische Ersatzlösungen nach sich.

Weiter offenbart die CH 446 211 A ein Behältnis zur Aufnahme von unter Druck stehenden Flüssigkeiten und/oder Gasen, insbesondere ein Saug-Druckfass, das durch mindestens eine quer zur Längserstreckung des Verhältnisses liegende, schwenkbar gelagerte Zwischenwand in Kammern unterteilt ist, wobei die Zwischenwand hinsichtlich ihres Umfangverlaufes korrespondierend zum Behälterinnenquerschnitt ausgebildet ist und an ihrem Umfang einen schlauchartigen, gummielastischen aufblasbaren Dichtring aufweist.

In der DE 876 342 wird ein elastisch verformbarer Gummischlauch als Abschluss für Behälter beschrieben, wobei der Gummischlauch durch einen bei der Formänderung des Schlauchquerschnittes durch Aufblasen auf Zug beanspruchten diametralen Steg aufweist, der sich über die Gesamtlänge des Schlauches erstreckt und dessen Ränder mit der Schlauchinnenwand stoffschlüssig verbunden sind.

Die FR 2 171 688 A5 offenbart eine in einem Behälter angeordnete aufblasbare Trennvorrichtung zur Abdichtung des Behälters.

Die EP 1 559 466 A1 beschriebt eine Behälteranordnung umfassend einen Behälter gezeigt, wobei der Behälter über eine mit einer aufblasbaren Dichtung versehene Abdichtungseinrichtung verfügt.

Aufgabe der Erfindung ist es daher eine Trennvorrichtung bereitzustellen, die die CIP Reinigung ermöglicht und für die automatische, rückstandsfreie Reinigung von SC Anlagen ausgelegt ist und neben einer hohen Stabilität und leichten Bauweise auch niedrige Baukosten aufweist.

Diese Aufgabe wird bei einer Trennvorrichtung eingangs genannter Art dadurch gelöst, dass die Stützstruktureinheiten jeweils gitterförmig ausgebildet sind.

Vorteilhafterweise ermöglicht die nach Art eines Stützkorbes ausgebildete erfindungsgemäße Trennvorrichtung den validierten Reinigungsprozess einer automatisierten CIP Reinigung von Dichtungssitzen von aufblasbaren Dichtungen, insbesondere in Fluidisierungsapparaten wie Wirbel- oder Strahlschichtapparaten.

Weiter vorteilhaft ist es möglich die Trenneinheit der Trennvorrichtung von Reinigungswasser während des Reinigungsprozesses umspülen zu lassen. Die Trennvorrichtung mit einer Trenneinheit ist somit CIP fähig.

Weitere Vorteile der erfindungsgemäßen Ausgestaltung der Trennvorrichtung mit einer Trenneinheit werden im Folgenden aufgeführt. Statt einer Nut, die ein massives Bauteil voraussetzt und in der Herstellung aufwendig bearbeitet werden muss, wird am Grundkörper eine Stützstruktur nach Art eines filigranen, gitterförmigen Stützkorbes angeordnet, wodurch die Trennvorrichtung im Vergleich zum massiven Bauteil mit Nut deutlich leichter wird. Zudem ist eine automatisierte CIP Reinigung der Anlage auch mit einer verbauten aufblasbaren Dichtung problemlos möglich. Hierzu wird bspw. ein in der Anlage verbautes Reinigungssystem mit einer Vielzahl an Düsen verwendet. Ebenso ist es vorteilhaft, dass ein Einlegen der aufblasbaren Dichtung in den Aufnahmeraum der Trenneinheit der Trennvorrichtung und ein Ausbau der aufblasbaren Dichtung aus selbigem ohne Werkzeug möglich ist. Die vorgenannten Arbeitsschritte erfolgen deshalb deutlich schneller und einfacher als nach den aus dem Stand der Technik bekannten technischen Lösungen.

Entsprechend der vorteilhaften Ausgestaltung der erfindungsgemäßen Trennvorrichtung weist die Stützstruktur jeweils eine oberhalb und unterhalb des Grundkörpers angeordnete Stützstruktureinheit auf. Durch die oberhalb des Grundkörpers angeordnete Stützstruktureinheit und die unterhalb des Grundkörpers angeordnete Stützstruktureinheit wird der die aufblasbare Dichtung zumindest teilweise aufnehmende Aufnahmeraum vorteilhaft ausgebildet. Gemäß einer besonders vorteilhaften Ausgestaltung ist der Aufnahmeraum rinnenförmig ausgebildet. Mittels dieser Ausgestaltung wird die aufblasbare Dichtung auch im drucklosen, entspannten Zustand in Position, d.h. im Aufnahmeraum, zwischen der Dicht- und der Gegendichtfläche gehalten.

Die Stützstruktureinheiten sind dabei jeweils gitterförmig ausgebildet. Hierdurch wird ermöglicht, dass die aufblasbare Dichtung im druckbeaufschlagten Zustand in Position gehalten wird und gleichzeitig eine gerichtete Expansion für die Abdichtung und Abtrennung der zwei Räume des Behälters in Richtung der die Gegendichtfläche ausbildenden Behälterwand erfährt. Überdies wird durch die gitterförmige Bauweise sichergestellt, dass die aufblasbare Dichtung und die Trennvorrichtung, insbesondere die Trenneinheit, stets optimal zu reinigen ist, sodass eine automatisierte den validierten Reinigungsprozess erfüllende CIP Reinigung einfach und sicher mittels eines Reinigungssystems durchführbar ist.

In einer weiteren erfindungsgemäßen Ausgestaltung umfasst die Stützstruktur eine Vielzahl Stützarmen. Bevorzugt weisen die Stützarme einen bogenförmigen Querschnitt auf.

Vorteilhafterweise sind an der Vielzahl an Stützarmen radial in Umfangsrichtung des Grundkörpers zueinander ausgerichtete Ringstrukturen angeordnet. Besonders bevorzugt sind die Ringstrukturen durch Streben zwischen den Stützarmen ausbildbar oder ausgebildet. Durch eine solche Ausgestaltung der erfindungsgemäßen Trennvorrichtung wird die Trennvorrichtung bei gleichzeitig hoher Stabilität in einer sehr leichten Bauweise konstruiert und ist die Herstellungskosten betreffend zudem sehr kostengünstig ausführbar.

Des Weiteren bevorzugt sind die Ringstrukturen und der Grundkörper bezogen auf eine Trenneinheithauptachse koaxial zueinander ausgerichtet und außerdem unter gegenseitigem axialen Abstand zueinander angeordnet. Gemäß einer zusätzlichen vorteilhaften Ausgestaltung weisen die Ringstrukturen mit zunehmendem Abstand vom Grundkörper einen größeren Durchmesser auf. Zudem bevorzugt nimmt zwischen den Ringstrukturen, die mit zunehmendem Abstand vom Grundkörper einen größeren Durchmesser aufweisen, ein Abstand zwischen zwei zueinander ausgerichteten Ringstrukturen mit zunehmendem Abstand vom Grundkörper ab. Hierdurch wird zusätzlich die leichte Bauweise der Trenneinheit gefördert.

Nachfolgend wird die Erfindung anhand der beiliegenden Zeichnung näher erläutert. In dieser zeigen
- Figur 1: eine in einer Nut angeordnete einen Grundkörper gegenüber einem eine Behälterwand aufweisenden Behälter abdichtende, aufblasbare Dichtung gemäß dem Stand der Technik,
- Figur 2: eine Teilschnittdarstellung eines Behälters mit einer eine Trenneinheit aufweisenden Trennvorrichtung im im Behälter eingebauten Zustand,
- Figur 3: eine perspektivische Teilschnittdarstellung einer in einem rinnenförmig ausgebildeten Aufnahmeraum der Trenneinheit der Trennvorrichtung aufgenommenen, aufblasbaren Dichtung in drucklosen, entspannten Zustand und
- Figur 4: eine perspektivische Teilschnittdarstellung einer in einem rinnenförmig ausgebildeten Aufnahmeraum der Trenneinheit der Trennvorrichtung aufgenommenen, aufblasbaren Dichtung in druckbeaufschlagtem Zustand.

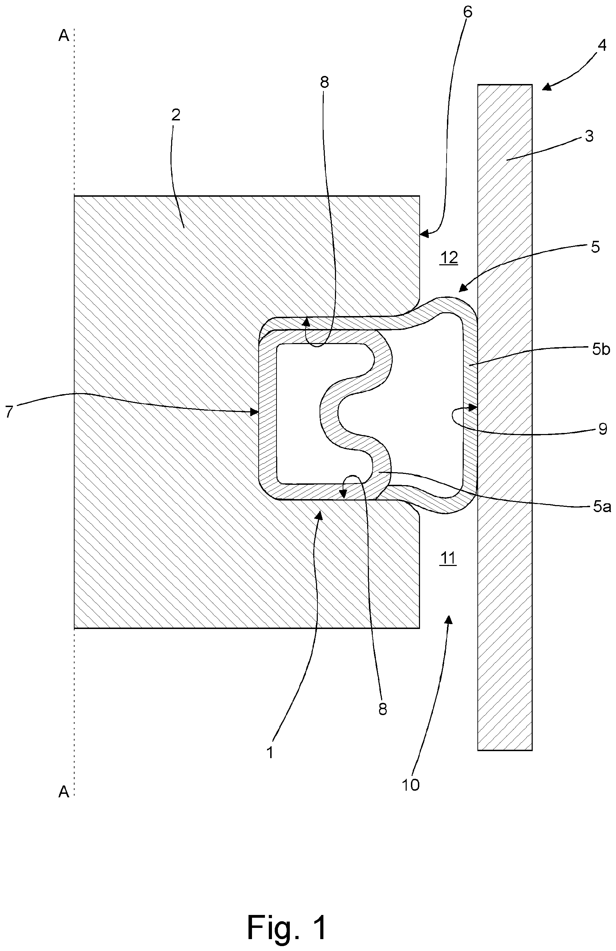

Fig. 1 zeigt eine in einer Nut 1 angeordnete einen Grundkörper 2 gegenüber einem eine Behälterwand 3 aufweisenden Behälter 4 abdichtende, aufblasbare Dichtung 5 gemäß dem Stand der Technik.

Die ausgebildete Nut 1 ist in einem Grundkörper 2, bspw. einer Filterplatte oder einem Anströmboden eines Fluidisierungsapparates, insbesondere eines Wirbel- oder Strahlschichtapparates, angeordnet und weist einen parallel zu der Außenumfangsfläche 6 in Richtung einer Behältermittelachse A-A versetzten Nutgrund 7 und zwei im Wesentlichen lotrecht zum Nutgrund 7 angeordnete Nutseitenflächen 8 auf. Eine derartige Ausgestaltung der Nut 1 wird als "geschlossene Nut" bezeichnet.

Die aufblasbare Dichtung 5 ist im drucklosen, entspannten Zustand lose in der Nut 1 angeordnet als aufblasbare Dichtung 5a dargestellt. Die lose in der Nut 1 angeordnete, aufblasbare Dichtung 5a liegt hierbei am Nutgrund 7 und an einer Nutseitenfläche 8 an.

Im druckbeaufschlagten Zustand ist die als aufblasbare Dichtung 5b dargestellte aufblasbare Dichtung 5 gegen den Nutgrund 7, die Nutseitenflächen 8 und die als Gegendichtfläche 9 ausgebildete Behälterwand 3 des Behälters 4, bspw. eines Fluidisierungsapparates, wie insbesondere einem Wirbel- oder Strahlschichtapparat, expandiert. Die aufblasbare Dichtung 5b dichtet so im druckbeaufschlagten Zustand einen zwischen dem Grundkörper 2 und der Behälterwand 3 gebildeten Ringspalt 10 ab und trennt somit zwei Räume, bspw. einen Rohgasraum 11 und einen Reingasraum 12, des Behälters 4 voneinander ab.

Diese aus dem Stand der Technik bekannte Einbauweise der Nut 1 weist den Nachteil auf, dass bspw. eine CIP Reinigung der Nut 1 und der in die Nut 1 einbrachten aufblasbaren Dichtung 5 nicht möglich ist und somit die aufblasbare Dichtung 5 für ein validierbares Reinigungsergebnis notwendigerweise aus der Nut 1 auszubauen und sowohl die aufblasbare Dichtung 5 als auch die Nut 1 manuell von Rückstanden des zuvor durchgeführten Prozesses zu reinigen ist.

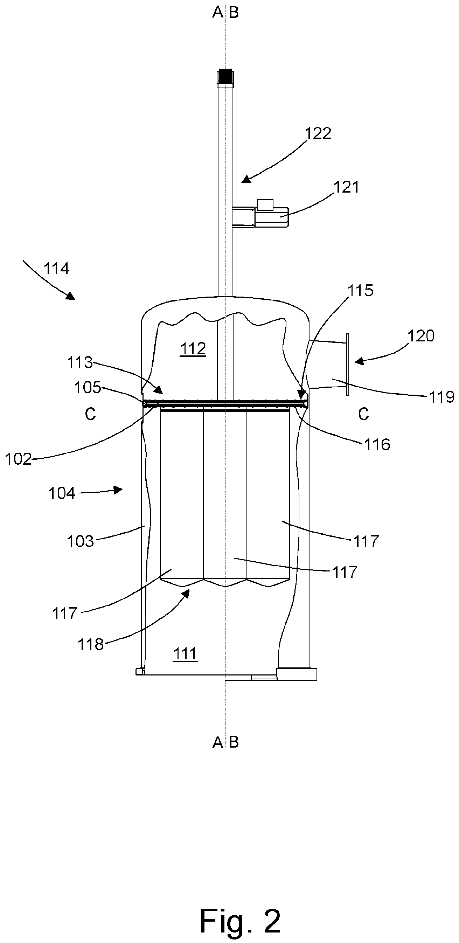

In Fig. 2 wird eine Teilschnittdarstellung eines eine Behältermittelachse A-A aufweisenden und eine Behälterwand 103 umfassenden Behälters 104 mit einer eine Trenneinheit 113 aufweisenden bevorzugten Trennvorrichtung 114 im eingebauten Zustand gezeigt. Die Behältermittelachse A-A entspricht hierbei einer Trenneinheithauptachse B-B.

Die Trenneinheit 113 weist einen Grundkörper 102 und eine im Bereich des Außenumfangs 115 der Trenneinheit 113 angeordnete Stützstruktur 116 auf. Die aufblasbare Dichtung 105 ist zwischen dem Grundkörper 102, der im Bereich des Außenumfangs 115 der Trenneinheit 113 angeordneten Stützstruktur 116 und der Behälterwand 103 des Behälters 104 angeordnet. Die Trenneinheit 113 der bevorzugten Trennvorrichtung 114 trennt hierbei mittels der aufblasbaren Dichtung 105 einen Rohgasraum 111 des Behälters 104 von einem Reingasraum 112 des Behälters 104 ab. Die Trenneinheit 113 ist vorliegend als Filterplatte ausgebildet.

An der eine Trenneinheitmittelachse C-C, wobei die Trenneinheitmittelachse C-C lotrecht zur Trenneinheithauptachse B-B ausgerichtet ist, aufweisenden Trenneinheit 113 ist ein einen Filter 117, insbesondere Metallfilter, umfassendes Filtersystem 118 angeordnet. Ein durch das Filtersystem 118 zu reinigender, mit Partikeln beladener Gasstrom strömt von einem hier nicht gezeigten Einlass in den Rohgasraum 111, von dort über die Filter 117 des Filtersystems 118 zur Aufreinigung des mit Partikeln beladenen Gasstroms in den Reingasraum 112 und über einen als Rohrstutzen 119 ausgebildeten Auslass 120 aus dem Reingasraum 112.

Die Trenneinheit 113 ist mittels einer über eine Antriebseinheit 121, insbesondere einen Elektromotor oder dgl., antreibbaren oder angetriebenen Verschiebeeinrichtung 122 aus dem Behälter 104 ein- und ausfahrbar. Diese Funktionalität wird bspw. zur Reinigung der Filter 117 des Filtersystems 118 genutzt.

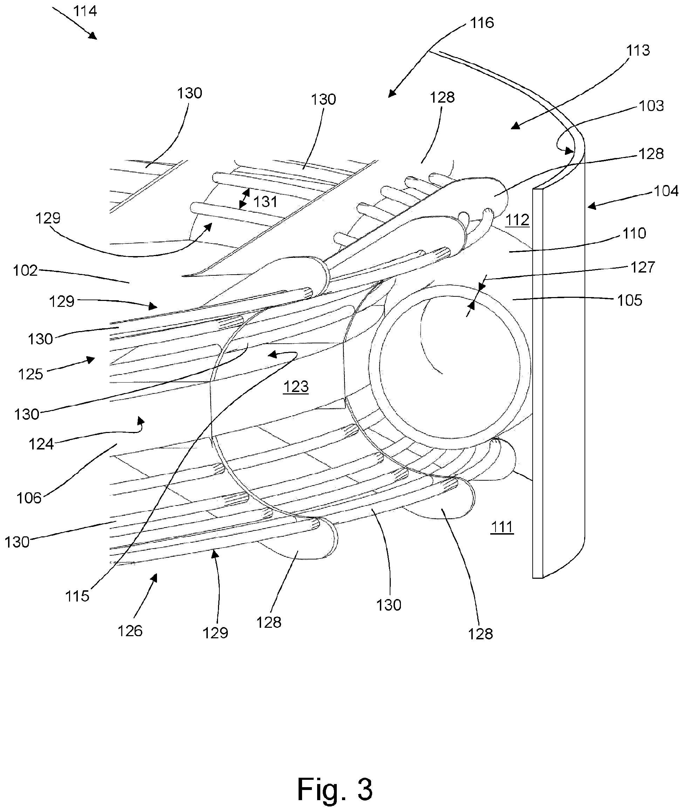

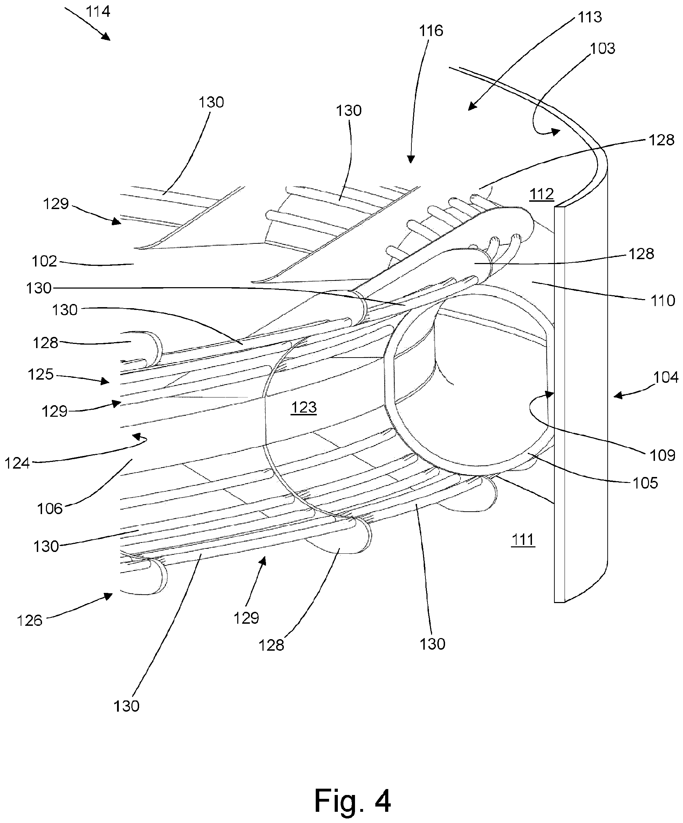

Der detaillierte Aufbau der bevorzugten Trennvorrichtung 114 mit einer Trenneinheit 113 wird in den Fign. 3 und 4 in einer perspektivischer Teilschnittdarstellung näher erläutert.

Die Trenneinheit 113 wird in den Fign. 3 und 4 im im Behälter 104 eingebauten Zustand gezeigt. Fig. 3 zeigt hierbei eine perspektivische Teilschnittdarstellung einer in einem rinnenförmig ausgebildeten Aufnahmeraum 123 der Trenneinheit 113 der bevorzugten Trennvorrichtung 114 aufgenommenen, aufblasbaren Dichtung 105 in drucklosen, entspannten Zustand. Im drucklosen, entspannten Zustand ist die aufblasbare Dichtung 105 nicht aufgeblasen.

Die Trenneinheit 113 umfasst einen eine als Dichtfläche 124 ausgebildete radiale Außenumfangsfläche 106 aufweisenden Grundkörper 102.

Der Grundkörper 102 ist koaxial zum eine Behälterwand 103 aufweisenden Behälter 104 angeordnet. Der Grundkörper 102 weist einen kleineren Durchmesser als der Behälter 102 auf, sodass sich zwischen der Behälterwand 103 und dem Grundkörper 102 ein Ringspalt 110 ausbildet.

Weiterhin weist die Trenneinheit 113 eine im Bereich ihres Außenumfangs 115 angeordnete Stützstruktur 116 auf. Die Stützstruktur 116 umfasst eine oberhalb des Grundkörpers 102 angeordnete Stützstruktureinheit 125 und eine unterhalb des Grundkörpers 102 angeordnete Stützstruktureinheit 126. Grundkörper 102 und Stützstruktur 116 spannen den die eine Wandstärke 127 aufweisende, aufblasbare Dichtung 105 zumindest teilweise aufnehmenden Aufnahmeraum 123 auf. Der so für die zumindest teilweise Aufnahme der aufblasbaren Dichtung 105 generierte Aufnahmeraum 123 der Trenneinheit 113 ist rinnenförmig ausgebildet. Mittels dieser Ausgestaltung wird die aufblasbare Dichtung 105 auch im drucklosen, entspannten Zustand in ihrer Position gehalten.

Die Stützstruktur 116 umfasst eine Vielzahl an einen bogenförmigen Querschnitt aufweisenden Stützarmen 128. An der Vielzahl an Stützarmen 128 sind radial in Umfangsrichtung des Grundkörpers 102 zueinander ausgerichtete Ringstrukturen 129 angeordnet. Die Ringstrukturen 129 sind bevorzugt, wie in Fig. 3 gezeigt, durch Streben 130 zwischen zwei benachbarten Stützarmen 128 ausgebildet. Die an der Vielzahl an Stützarmen 128 radial in Umfangsrichtung des Grundkörpers 102 angeordneten Streben 130 sind dementsprechend auch zueinander ausgerichtet. Durch die zueinander ausgerichteten Ringstrukturen 129 sind die Stützstruktureinheiten 125, 126 der Stützstruktur 115 jeweils gitterförmig ausgebildet. Hierdurch wird die Trennvorrichtung 114 bei gleichzeitig hoher Stabilität in einer sehr leichten Bauweise konstruiert und ist die Herstellungskosten betreffend zudem sehr kostengünstig ausführbar.

Es wird des Weiteren dadurch ermöglicht, dass die aufblasbare Dichtung 105 im druckbeaufschlagten Zustand in Position gehalten wird und gleichzeitig eine gerichtete Expansion für die Abdichtung und Abtrennung der zwei Räume 111, 112 des Behälters 104 erfährt. Überdies wird durch die gitterförmige Bauweise sichergestellt, dass die aufblasbare Dichtung 105 und die Trennvorrichtung 114, insbesondere die Trenneinheit 113, stets optimal zu reinigen ist, sodass eine automatisierte den validierten Reinigungsprozess erfüllende CIP Reinigung einfach und sicher durchführbar ist.

Darüber hinaus sind die Ringstrukturen 129 und der Grundkörper 102 bezogen auf eine Trenneinheithauptachse B-B koaxial zueinander ausgerichtet und außerdem unter gegenseitigem axialen Abstand zueinander angeordnet. Zudem weisen die Ringstrukturen 129 mit zunehmendem Abstand vom Grundkörper 102 einen größeren Durchmesser auf.

Zwischen den Ringstrukturen 129, die mit zunehmendem Abstand vom Grundkörper 102 einen größeren Durchmesser aufweisen, nimmt ein Abstand 131 zwischen zwei zueinander ausgerichteten Ringstrukturen 129 mit zunehmendem Abstand vom Grundkörper 102 ab. Hierdurch wird zusätzlich die leichte Bauweise der Trennvorrichtung 114 mit Trenneinheit 113 gefördert.

Sowohl die Anzahl an am Grundkörper 102 angeordneten Stützarmen 128 selbst als auch die Anzahl der zwischen den Stützarmen 128 angeordneten Ringstrukturen 129 kann variieren.

Die durch Streben 130 ausgebildeten Ringstrukturen 129 können auch anders als koaxial zueinander zwischen den Stützarmen 128 angeordnet sein, bspw. schräg, mäander- oder kreuzförmig.

Es ist möglich die Trenneinheit 113 der Trennvorrichtung 114 von Reinigungswasser während des Reinigungsprozesses, d. h. im drucklosen, entspannten Zustand durch hier nicht gezeigte, im Behälter 104 angeordnete Düseneinrichtungen umspülen zu lassen. Die Trennvorrichtung 114 ist somit CIP fähig. Zudem ist eine automatisierte CIP Reinigung der Anlage auch mit einer verbauten aufblasbaren Dichtung 105 problemlos möglich.

Eine in einem rinnenförmig ausgebildeten Aufnahmeraum 123 der Trenneinheit 113 der Trennvorrichtung 114 aufgenommene aufblasbare Dichtung 105 in druckbeaufschlagtem Zustand zeigt Fig. 4 als perspektivische Teilschnittdarstellung. Die Trenneinheit 113 der Trennvorrichtung 114 unterscheidet sich von der in Fig. 3 dargestellten Trenneinheit 113 dadurch, dass die aufblasbare Dichtung 105 druckbeaufschlagt, d. h. aufgeblasen ist.

Die Trenneinheit 113 ist im eingebauten Zustand derart in dem die eine Gegendichtfläche 109 ausbildenden Behälterwand 103 aufweisenden Behälter 104 angeordnet, dass die Dichtfläche 124 von der Gegendichtfläche 109 ringförmig umschlossen ist. Hierdurch ist die aufblasbare Dichtung 105 im drucklosen, entspannten Zustand lose in dem Aufnahmeraum 123 angeordnet.

Im in Fig. 4 gezeigten, druckbeaufschlagten Zustand ist die aufblasbare Dichtung 105 expandiert und liegt sowohl an der Dichtfläche 124 als auch der als Gegendichtfläche 109 ausgebildeten Behälterwand 103 des Behälters 104 an, sodass die aufblasbare Dichtung 105 den Behälter 105 in zwei Räume, nämlich in Rohgasraum 111 und Reingasraum 112, abtrennt und diese gegeneinander abdichtet. Die aufblasbare Dichtung 105 füllt somit im druckbeaufschlagten Zustand den Ringspalt 110 aus.

Zusätzlich wird eine Expansion der druckbeaufschlagten, aufblasbaren Dichtung 105 durch den mittels Grundkörper 102 und Stützstruktur 116 ausgebildeten, rinnenförmige Aufnahmeraum 123 geführt, sodass eine Ausdehnung der aufblasbaren Dichtung 105 im Wesentlichen in Richtung der hier nicht gezeigten Trenneinheitmittelachse C-C erfolgt, d. h. in Richtung Dichtfläche 124 und Gegendichtfläche 109.

## Patentansprüche

1. Trennvorrichtung (114) mit einer Trenneinheit (113) zur Abtrennung und Abdichtung zweier Räume (111, 112) eines Behälters (104), wobei die Trenneinheit (113) einen eine als Dichtfläche (124) ausgebildete radiale Außenumfangsfläche (106) aufweisenden Grundkörper (102) umfasst, wobei die Trenneinheit (113) eine im Bereich des Außenumfangs (115) angeordnete, jeweils über eine oberhalb und unterhalb des Grundkörpers (102) angeordnete Stützstruktureinheit (125, 126) verfügende Stützstruktur (116) aufweist, und der Grundkörper (102) mit der Stützstruktur (116) einen eine aufblasbare Dichtung (105) zumindest teilweise aufnehmenden Aufnahmeraum (123) aufspannt, die Trenneinheit (113) im eingebauten Zustand derart in dem eine eine Gegendichtfläche (109) ausbildenden Behälterwand (103) aufweisenden Behälter (104) angeordnet ist, dass die Dichtfläche (124) von der Gegendichtfläche (109) ringförmig umschlossen ist, sodass die aufblasbare Dichtung (105) im drucklosen, entspannten Zustand lose in dem Aufnahmeraum (123) angeordnet ist und im druckbeaufschlagten Zustand expandiert ist und sowohl an der Dichtfläche (124) als auch der Gegendichtfläche (109) anliegt, sodass die aufblasbare Dichtung (105) den Behälter (104) in zwei Räume (111, 112) abtrennt und diese gegeneinander abdichtet, **dadurch gekennzeichnet, dass** die Stützstruktureinheiten (125, 126) jeweils gitterförmig ausgebildet sind.

2. Trennvorrichtung (114) nach Anspruch 1, **dadurch gekennzeichnet, dass** die Stützstruktur (116) eine Vielzahl an einen bogenförmigen Querschnitt aufweisenden Stützarmen (128) umfasst.

3. Trennvorrichtung (114) nach Anspruch 2, **dadurch gekennzeichnet, dass** an der Vielzahl an Stützarmen (128) radial in Umfangsrichtung des Grundkörpers (102) zueinander ausgerichtete Ringstrukturen (129) angeordnet sind.

4. Trennvorrichtung (114) nach Anspruch 3, **dadurch gekennzeichnet, dass** die Ringstrukturen (129) durch Streben (130) zwischen den Stützarmen (128) ausgebildet sind.

5. Trennvorrichtung (114) nach Anspruch 3 oder 4, **dadurch gekennzeichnet, dass** die Ringstrukturen (129) und der Grundkörper (102) bezogen auf eine Trenneinheithauptachse B-B koaxial zueinander ausgerichtet sind und außerdem unter gegenseitigem axialen Abstand zueinander angeordnet sind.

6. Trennvorrichtung (114) nach einem der Ansprüche 3 bis 5, **dadurch gekennzeichnet, dass** die Ringstrukturen (129) mit zunehmendem Abstand vom Grundkörper (102) einen größeren Durchmesser aufweisen.

7. Trennvorrichtung (114) nach einem der Ansprüche 3 bis 6, **dadurch gekennzeichnet, dass** zwischen den Ringstrukturen (129), die mit zunehmendem Abstand vom Grundkörper (102) einen größeren Durchmesser aufweisen, ein Abstand (131) zwischen zwei zueinander ausgerichteten Ringstrukturen (129) mit zunehmendem Abstand vom Grundkörper (102) abnimmt.

8. Trennwandvorrichtung (114) nach einem der vorhergehenden Ansprüche, **dadurch gekennzeichnet, dass** der Aufnahmeraum (123) rinnenförmig ausgebildet ist.

## Claims

1. A separating device (114) with a separating unit (113) for separating and sealing two chambers (111, 112) of a container (104), wherein the separating unit (113) comprises a main body (102) which has a radial outer peripheral surface (106) which is designed as a sealing surface (124), wherein the separating unit (113) comprises a support structure (116) which is arranged in the region of the outer periphery (115) and which each comprises a support structure unit (125, 126) which is arranged above and below the main body (102), and wherein the main body(102) with the support structure (116) forms a receiving space (123) which at least partly receives a inflatable seal (105), and the separating unit (113) in the installed state is arranged in the container (104) which comprises a container wall (103) which forms the counter sealing surface (109), in a manner such that the sealing surface (124) is annularly enclosed by the counter sealing surface (109), so that the inflatable seal (105) in the pressure-free, relaxed state is arranged loosely in the receiving space (123) and in the state in which it is subjected to pressure is expanded and bears on the sealing surface (124) as well as the counter sealing surface (109), so that the inflatable seal (105) separates the container (104) into two chambers (111, 112) and seals these with respect to one another **characterised in that** the support structure units (125, 126) are each designed in a grid-like manner.

2. A separating device (114) according to claim 1, **characterised in that** the support structure (116) comprises a multitude of support arms (128) which have an arcuate cross section.

3. A separating device (114) according to claim 2, **characterised in that** ring structures (129) which are aligned radially to one another in the circumferential direction of the main body (102) are arranged on the multitude of support arms (128).

4. A separating device (114) according to claim 3, **characterised in that** the ring structures (129) are formed by way of struts (130) between the support arms (128).

5. A separating device (114) according to claim 3 or 4, **characterised in that** the ring structures (129) and the main body (102) are aligned coaxially to one another with respect to a separating unit main axis B-B and furthermore are arranged at a mutual axial distance to one another.

6. A separating device (114) according to claim 3 to 5, **characterised in that** the ring structures (129) have a larger diameter with an increasing distance to the main body (102).

7. A separating device (114) according to claim 3 to 6, **characterised in that** between the ring structures (129) which have a larger diameter with an increasing distance to the main body (102), a distance (131) between two ring structures (129) which are aligned to one another reduces with an increasing distance to the main body (102).

8. A separating device (114) according to one of the preceding claims, **characterised in that** the receiving space (123) is designed in a trough-like manner.

## Revendications

1. Dispositif de séparation (114) avec une unité de séparation (113) pour la séparation et l'étanchéité de deux espaces (111, 112) d'un récipient (104), dans lequel l'unité de séparation (113) comporte un corps de base (102) présentant une surface périphérique extérieure (106) radiale réalisée comme surface étanche (124), dans lequel l'unité de séparation (113) présente une structure d'appui (116) agencée dans la zone de la périphérie extérieure (115), disposant respectivement d'une unité de structure d'appui (125, 126) agencée au-dessus et en dessous du corps de base (102), et le corps de base (102) serre avec la structure d'appui (116) un espace de réception (123) recevant au moins partiellement une garniture (105) gonflable, l'unité de séparation (113) est agencée dans l'état intégré dans le récipient (104) présentant une paroi de récipient (103) réalisant une surface étanche antagoniste (109), que la surface étanche (124) est entourée de manière annulaire par la surface étanche antagoniste (109) de sorte que la garniture (105) gonflable soit agencée dans l'état desserré sans pression de manière lâche dans l'espace de réception (123) et soit dilatée dans l'état alimenté en pression et repose non seulement contre la surface étanche (124) mais aussi contre la surface étanche antagoniste (109) de sorte que la garniture (105) gonflable sépare le récipient (104) en deux espaces (111, 112) et rende étanche ceux-ci l'un contre l'autre, **caractérisé en ce que** les unités de structure d'appui (125, 126) sont réalisées respectivement en forme de grille.

2. Dispositif de séparation (114) selon la revendication 1, **caractérisé en ce que** la structure d'appui (116) comporte une pluralité de bras d'appui (128) présentant une section transversale en forme d'arc.

3. Dispositif de séparation (114) selon la revendication 2, **caractérisé en ce que** des structures annulaires (129) orientées radialement dans le sens périphérique du corps de base (102) les unes par rapport aux autres sont agencées au niveau de la pluralité de bras d'appui (128).

4. Dispositif de séparation (114) selon la revendication 3, **caractérisé en ce que** les structures annulaires (129) sont réalisées par des entretoises (130) entre les bras d'appui (128).

5. Dispositif de séparation (114) selon la revendication 3 ou 4, **caractérisé en ce que** les structures annulaires (129) et le corps de base (102) sont orientés par rapport à un axe principal d'unité de séparation B-B coaxialement les uns des autres et sont en outre agencés sous distance axiale mutuelle les uns des autres.

6. Dispositif de séparation (114) selon l'une quelconque des revendications 3 à 5, **caractérisé en ce que** les structures annulaires (129) présentent un diamètre plus grand au fur et à mesure que la distance du corps de base (102) croît.

7. Dispositif de séparation (114) selon l'une quelconque des revendications 3 à 6, **caractérisé en ce qu'**une distance (131) entre deux structures annulaires (129) orientées l'une par rapport à l'autre diminue au fur et à mesure que la distance du corps de base (102) croît, entre les structures annulaires (129) qui présentent un diamètre plus grand au fur et à mesure que la distance du corps de base (102) croît.

8. Dispositif de paroi de séparation (114) selon l'une quelconque des revendications précédentes, **caractérisé en ce que** l'espace de réception (123) est réalisé en forme de rigole.
